# EUROPÄISCHE PATENTSCHRIFT

(11) **EP 0 881 965 B1**
(45) Veröffentlichungstag und Bekanntmachung des Hinweises auf die Patenterteilung: **05.04.2000**
(21) Anmeldenummer: 97903228.1
(22) Anmeldetag: 06.02.1997
(51) Int. Cl.: B32B 21/13, B32B 3/30, B27M 3/00, E04C 2/12

(54) **VAKUUMVERLEIMTE SCHICHTHOLZPLATTE**
VACUUM-BONDED LAMINATED WOOD PANEL
PANNEAU DE BOIS STRATIFIE COLLE SOUS VIDE

(30) Priorität: 07.02.1996 DE 19604433
(43) Veröffentlichungstag der Anmeldung: 09.12.1998
(73) Patentinhaber: Moser, Karl, 86551 Aichach (DE)
(72) Erfinder: Moser, Karl, 86551 Aichach (DE)
(74) Vertreter: Liska, Horst, Dr.-Ing.
(86) Internationale Anmeldenummer: EP9700546
(87) Internationale Veröffentlichungsnummer: WO9728961

(56) Entgegenhaltungen:
- AT-B- 397 489
- CH-A- 193 552
- DE-A- 2 830 938
- DE-C- 931 005
- DE-U- 9 408 382
- GB-A- 822 369
- GB-A- 2 260 935
- US-A- 2 661 511
- BAUEN MIT HOLZ Bd.11, 1995, Seiten 941 - 947 'Dickholz durch Vakuum'

## Beschreibung

Die Erfindung betrifft eine Schichtholzplatte, insbesondere eine Brettschichtholzplatte, sowie ein Verfahren zur Herstellung einer Schichtholzplatte, insbesondere einer Brettschichtholzplatte.

Zur Herstellung von Schichtholzplatten werden mehrere Holzschichten aufeinandergestapelt und miteinander verklebt. Dabei ist es - abhängig vom verwendeten Klebstoff - meist notwendig, daß die Leimfuge, d. h. der mit Klebstoff gefüllte Raum zwischen den einzelnen Holzschichten, möglichst dünn wird, um eine zuverlässige und belastbare Verklebung zu gewährleisten. Dazu sind in der Regel vergleichsweise hohe Preßdrücke erforderlich, die durch mechanische Pressen oder durch Einspannwerkzeuge, wie Schraubzwingen oder dergleichen aufgebracht werden, damit der Klebstoff gleichmäßig zwischen den Holzschichten verteilt wird. Das Austreten des Klebstoffs an den Rändern der Leimfuge ist für den Fachmann ein Indiz für diese gleichmäßige Verteilung des Klebstoffs.

Insbesondere für großformatige Schichtholzplatten ist aus Kostengründen ein neues Herstellungsverfahren vorteilhaft, welches in der nicht vorveröffentlichten deutschen Patentanmeldung P 44 27 365.7 vorgeschlagen wird. Bei diesem Verfahren werden die gestapelten Holzschichten mit einem luftdichten Folienmantel abgedeckt, der Bestandteil einer dicht verschließbaren Umhüllung ist und die Umhüllung zumindest während eines Teils der Abbindezeit des Klebstoffs evakuiert. Dies erspart - unter Ausnutzung des umgebenden Luftdrucks - den Einsatz aufwendiger mechanischer Pressen. Nachteilig bei diesem Verfahren ist jedoch, daß der damit erreichte Preßdruck zum Verkleben der Holzschichten höchstens gleich dem atmosphärischen Luftdruck ist, wenn man keine weiteren Mittel vorsieht. Dies kann zur Folge haben, daß der aufgebrachte Druck nicht ausreicht, um den Klebstoff gleichmäßig zu verteilen und damit eine hinreichend dünne Leimfuge auszubilden.

Es ist daher Aufgabe der Erfindung, eine Schichtholzplatte der oben beschriebenen Art anzugeben, bei der die Verteilung des Klebstoffs optimiert ist.

Es ist ferner Aufgabe der Erfindung, ein Verfahren der oben beschriebenen Art zur Herstellung einer derartigen Schichtholzplatte anzugeben, das mit einfachen Mitteln durchzuführen ist.

Die Erfindung geht von einer Schichtholzplatte mit einer Vielzahl flach aufeinanderliegend gestapelter Holzschichten aus, die an paarweise benachbarten Flachseiten miteiander flächig, insbesondere vollflächig, verklebt sind, wobei zumindest ein Teil paarweise benachbarter Holzschichten quer zueinander, insbesondere etwa senkrecht zueinander, verlaufende Faserrichtungen haben.

Bei einer erfindungsgemäßen Schichtholzplatte ist vorgesehen, daß zumindest ein Teil der paarweise benachbarten und miteinander verklebten Flachseiten jeweils mit einer Vielzahl im wesentlichen in Faserrichtung und etwa parallel verlaufenden Nuten versehen sind, derart, daß zumindest in einem Teil der mit quer zueinander verlaufenden Faserrichtungen paarweise einander benachbarten Holzschichten die Nuten der benachbarten Flachseiten sich kreuzen.

Der Erfindung liegt die Idee zugrunde, daß an den Kreuzungsstellen der Nuten zwischen den zu verklebenden Holzschichten Hohlräume entstehen, die während des Preßvorgangs als Senken für den Klebstoff dienen und damit eine gleichmäßige und lateral allseitige Verteilung des Klebstoffs fördern. Die Vielzahl dieser im Bereich der Leimfuge verteilten Kreuzungsstellen und der damit entstehenden Senken verhindert das Auftreten lokaler Klebstoffansammlungen während des Pressens und die damit verbundene Vergrößerung der Leimfuge an diesen Stellen.

Die derart ausgebildete Schichtholzplatte eignet sich daher für Herstellungsverfahren, bei denen geringere Preßdrücke eingesetzt werden, insbesondere für das oben skizzierte Vakuumverleimen.

Das Verkleben der Holzschichten mit gleichmäßig dünnen Fugen hat ferner den Vorteil, daß Klebstoffmenge gespart werden kann bzw. preiswertere Kleber verwendet werden können.

Die erfindungsgemäße Schichtholzplatte kann aufgrund ihrer bauphysikalischen Eigenschaften vorteilhaft als Wandbauteil verwendet werden, weil sie ein hohes Maß an Luftdichtigkeit mit einem relativ geringen Dampfdiffusionswiderstand verbindet. Die letztere Eigenschaft resultiert einerseits aus den hohen Feuchtigkeitstransportraten längs der sich kreuzenden Nuten, so daß die Feuchtigkeit in der Platte lateral schnell verteilt wird. Andererseits wird, besonders im Falle relativ tiefer Nuten, auch die Diffusionsoffenheit für die Diffusion durch die Platte hindurch erhöht.

In Bereichen mit relativ hohen Schubspannungen, beispielsweise in Auflagerbereichen von Platten, kann es zur Erhöhung der Steifigkeit sinnvoll sein, lokal vergleichsweise große Klebstoffmengen einzubringen, die dann beim Verpressen der Holzschichten in die Nuten eindringen und nach Aushärtung druckfeste Nutenausfüllungen ergeben.

Das erfindungsgemäße Verfahren geht aus von einem Verfahren zur Herstellung einer Schichtholzplatte, insbesondere einer Brettschichtholzplatte, bei welchem eine Vielzahl Holzschichten flach aufeinander gestapelt und mit den paarweise benachbarten Flachseiten miteinander flächig, insbesondere vollflächig verklebt werden, wobei zumindest ein Teil paarweise benachbarter Holzschichten mit quer zueinander, insbesondere etwa senkrecht zueinander, verlaufenden Faserrichtungen gestapelt werden und der Holzstapel mit einem luftdichten Folienmantel abgedeckt wird, der Bestandteil einer dicht verschließbaren Umhüllung ist, die zumindest während eines Teils der Kleberabbindezeit evakuiert wird.

Ein solches Verfahren ist aus der Zeitschrift "Bauer mit Holz", 11/1995, Seiten 941-947 bekannt.

Bei diesem Verfahren ist erfindungsgemäß vorgesehen, daß zumindest in einen Teil der Holzschicht-Flachseiten jeweils eine Vielzahl im wesentlichen in Faserrichtung und etwa parallel verlaufende Nuten eingearbeitet werden, die Holzschichten derart gestapelt werden, daß zumindest in einem Teil der mit quer zueinander verlaufender Faserrichtung paarweise benachbart gestapelten Holzschichten die Nuten der benachbarten Flachseiten sich kreuzen.

Das Verfahren kann mit einfachen Mitteln durchgeführt werden und erfordert insbesondere keine mechanische Presse.

Die Nuten können in einem Arbeitsgang zusammen mit dem Hobeln der Holzschichten eingearbeitet werden, beispielsweise indem die Holzschicht eine Bearbeitungsstation mit Hobeln sowie Kreissägen oder Fräsern durchläuft.

Das Verpressen der Holzschichten mittels eines luftdichten Folienmantels ist einfach und insbesondere dann sehr vorteilhaft, wenn die Schichtholzplatte als Konstruktionsteil eines Bauwerks vorgesehen ist. In diesem Fall können aus bequem zu transportierenden einzelnen Holzelementen großformatige Schichtholzplatten vor Ort hergestellt werden. Damit erspart man sich den Transport dieser Platten, die Längen bzw. Breiten von einigen Metern und Flächen in der Größenordnung von 100 m² aufweisen können.

Bei der erfindungsgemäßen Schichtholzplatte ist bevorzugt, daß zumindest die beidseitig durch Holzschichten mit quer verlaufender Faserrichtung abgedeckten Holzschichten auf beiden Flachseiten mit Nuten versehen sind.

Dies hat den Vorteil, daß bei sämtlichen Leimfugen der Schichtholzplatte die Verteilung des Klebstoffs verbessert wird.

Die auf den beiden Flachseiten vorgesehenen Nuten können auf Lücke versetzt, insbesondere mittig versetzt, angeordnet werden.

Alternativ dazu können die auf beiden Flachseiten vorgesehenen Nuten auch paarweise in derselben Querschnittsebene verlaufen.

In beiden Fällen ist die Dichte der Nuten auf den entgegengesetzten Flachseiten gleich und das durch Einarbeitung der Nuten aus der Holzschicht entfernte Material fehlt gleichmäßig verteilt über den Querschnitt dieser Holzschicht.

Es kann auch vorgesehen sein, daß wenigstens eine der Holzschichten lediglich auf einer ihrer Flachseiten mit Nuten versehen ist und diese Nuten eine Tiefe von mindestens der Hälfte der Dicke dieser Holzschicht aufweisen.

Diese Holzschichten besitzen eine Flachseite ohne Nuten, was im Einzelfall wünschenswert sein kann, beispielsweise aus ästhetischen Gründen, wenn diese Flachseite sichtbar ist oder aus konstruktiven Gründen, beispielsweise wenn Nuten beim Aufbringen einer Deckschicht hinderlich wären.

Die Tiefe der Nuten beeinflußt zusammen mit deren Breite einerseits die Effektivität der Nuten als Senken für den Klebstoff und andererseits die bauphysikalischen Eigenschaften der Schichtholzplatte.

Wenn auf beiden Flachseiten Nuten auf Lücke versetzt angeordnet sind, können diese Nuten gleichfalls eine Tiefe von mindestens der Hälfte der Dicke der Holzschicht aufweisen.

Wenn die auf den beiden Flachseiten vorgesehenen Nuten paarweise in derselben Querschnittsebene verlaufen, können diese Nuten gegebenenfalls eine Tiefe von mindestens einem Viertel der Dicke der Holzschicht aufweisen.

Die damit relativ nahe benachbarten und gegenüberliegenden Nuten der entgegengesetzten Flachseiten steigern wiederum die Diffusionsoffenheit der Holzschicht.

Die Herstellung der erfindungsgemäßen Schichtholzplatte wird vereinfacht, wenn alle Holzschichten auf beiden ihrer Flachseiten mit Nuten versehen werden.

Im folgenden wird ein Ausführungsbeispiel der Erfindung anhand einer Zeichnung näher erläutert. Hierbei zeigt:
- Figur 1: eine perspektivische Darstellung eines Teilbereichs einer erfindungsgemäßen Schichtholzplatte; und
- Figur 2a-2c: verschiedene Querschnitte durch einzelne Holzschichten einer erfindungsgemäßen Schichtholzplatte.

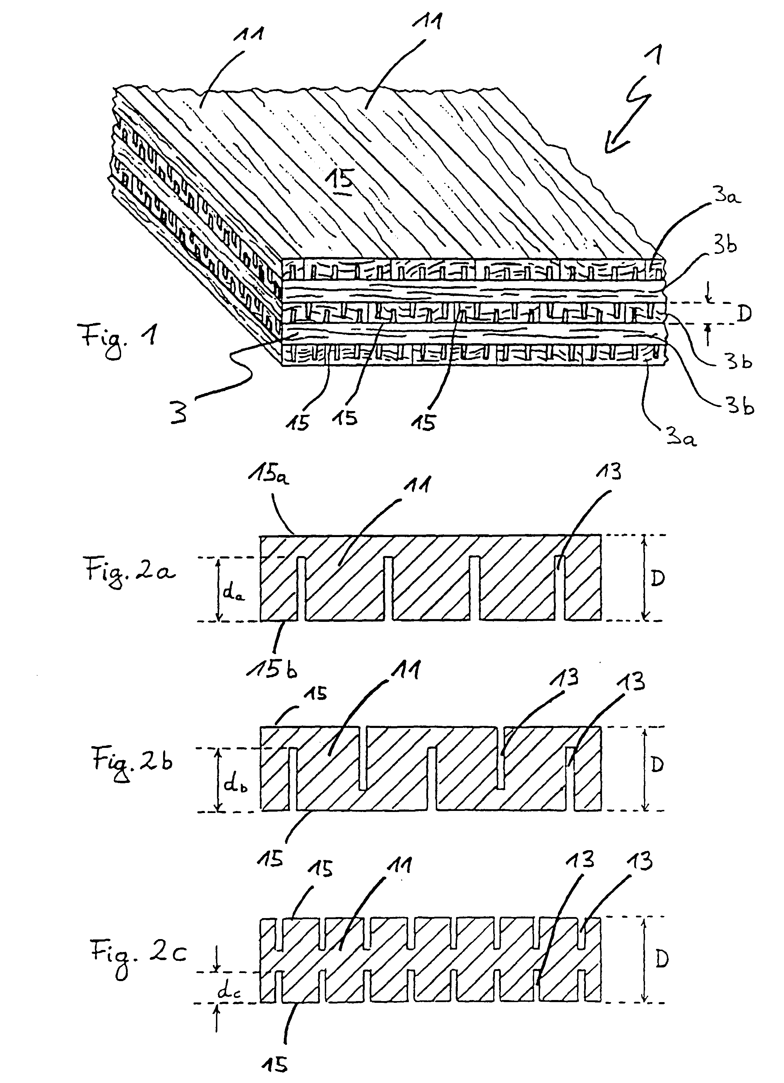

Fig. 1 zeigt eine Schichtholzplatte 1, die mehrere Holzschichten 3 umfaßt, die an paarweise benachbarten Flachseiten 15 miteinander vollflächig verklebt sind. Die Holzschichten 3 umfassen jeweils mehrere Holzelemente in Form von Brettern 11, deren Holzfasern innerhalb einer Holzschicht jeweils parallel verlaufen. Sämtliche paarweise benachbarten Holzschichten haben senkrecht zueinander verlaufende Faserrichtungen. Die paarweise benachbarten und miteinander verklebten Flachseiten 15 sind jeweils mit einer Vielzahl in Faserrichtung und parallel verlaufenden Nuten 13 versehen, so daß in den paarweise einander benachbarten Holzschichten 3 die Nuten 13 der benachbarten Flachseiten 15 sich kreuzen.

Beim Verleimen der einzelnen Holzschichten 3 verbessern die durch die Nuten 13 gebildeten Hohlräume die Verteilung des Klebstoffs und tragen damit zur Ausbildung dünnerer Leimfugen bei, wobei durch die sich kreuzenden Nuten eine allseitige Verteilung des Klebstoffs gefördert wird.

Um diesen Vorteil für alle Leimfugen zu erhalten, müssen, wie in Fig. 1 dargestellt, die inneren Holzschichten 3b, d.h. die beidseitig durch Holzschichten abgedeckten Holzschichten auf beiden ihrer Flachseiten 15 mit Nuten 13 versehen sein, während es bei den äußeren Holzschichten 3a genügt, Nuten 13 jeweils auf der nach innen gewandten Flachseite vorzusehen.

In diesem Ausführungsbeispiel besitzen die äußeren Holzschichten 3a den in Fig. 2a dargestellten Querschnitt, während die inneren Schichten 3b den in Fig. 2b gezeigten Querschnitt aufweisen.

Fig. 2a zeigt den Querschnitt einer Holzschicht 3, die lediglich auf einer ihrer Flachseiten 15b Nuten 13 aufweist, während die entgegengesetzte Flachseite 15a frei von Nuten ist. Die Nuten 13 weisen einen gegenseitigen Abstand von etwa 15 bis 120 Millimetern, vorzugsweise etwa 20 bis 30 Millimetern, und eine Breite von wenigen Millimetern auf. Im Hinblick auf die Diffusionseigenschaften der einzelnen Holzschichten 3 und damit der gesamten Platte 1 besitzen die Nuten 13 vorteilhaft eine Tiefe dₐ, welche größer als die Hälfte der Dicke D dieser Holzschicht ist. Um die mechanische Stabilität der einzelnen Holzschichten 3 bzw. der Bretter 11 durch die Nuten 13 nicht übermäßig zu beeinträchtigen, empfiehlt sich eine Tiefe im Bereich des 0,5 bis 0,8fachen der Dicke. Das Einarbeiten der Nuten 13 ist wesentlich vereinfacht, wenn diese wie dargestellt geradlinig verlaufen. Eine äquidistante Anordnung der Nuten 13 ist nicht unbedingt erforderlich, wenngleich dadurch eine besonders regelmäßige Verteilung der Nuten gewährleistet ist.

Fig. 2b zeigt einen Querschnitt durch eine beidseitig mit Nuten 13 versehene Holzschicht 3, wobei die auf den beiden Flachseiten 15 vorgesehenen Nuten 13 auf Lücke mittig versetzt angeordnet sind. Dieser Versatz der Nuten erlaubt es gleichfalls, eine Tiefe d_{b} der Nuten vorzusehen, die größer als die Hälfte der Dicke D der Holzschicht 3 ist.

Fig. 2c zeigt eine Variante der Holzschicht aus Fig. 2b. Demnach können die auf den beiden Flachseiten 15 vorgesehenen Nuten 13 auch paarweise in derselben Querschnittsebene verlaufen. In diesem Fall ist die Tiefe d_{c} der Nuten geringer als die Hälfte der Dicke D.

Das erfindungsgemäße Verfahren zur Herstellung einer Schichtholzplatte 1 wird beispielsweise wie folgt durchgeführt:

Die für die Bildung der einzelnen Holzschichten 3 vorgesehenen Holzelemente, wie Platten oder Bretter 11, durchlaufen eine Hobelmaschine, um die Unebenheiten dieser Holzelemente grob zu beseitigen.

In Verbindung mit dem Hobeln werden in einen Teil der Holzelemente im wesentlichen in Faserrichtung und etwa parallel verlaufende Nuten 13 eingearbeitet. Diese Nuten können eingefräst oder, im Falle geradliniger Nuten vorteilhaft eingesägt werden.

Die für eine äußere Holzschicht 3a vorgesehenen Holzelemente werden nebeneinander gestoßen in eine Wanne gelegt, wobei die Holzelemente abhängig vom vorgesehenen Format der Schichtholzplatte 1 auch in zwei Richtungen gestoßen sein können.

Auf diese erste Holzschicht 3a wird nun, vorzugsweise mittels eines Automaten, flächig Klebstoff aufgetragen und die nächste Holzschicht 3b durch Auflegen weiterer Holzelemente auf die mit Klebstoff bedeckte Flachseite 15 der ersten Schicht 3a gebildet. Die letzten beiden Schritte werden gegebenenfalls öfter wiederholt, bis der resultierende Holzstapel eine vorgegebene Anzahl von Holzschichten 3 aufweist und schließlich durch eine Deckschicht als eine zweite äußere Holzschicht 3a vervollständigt wird.

Beim Stapeln wird die Holzfaserrichtung mehrmals geändert, so daß bei zumindest einem Teil der mit quer zueinander verlaufender Faserrichtung paarweise benachbart gestapelten Holzschichten die Nuten 13 der benachbarten Flachseiten sich kreuzen.

Diese Stapelweise erhöht einerseits die mechanische Belastbarkeit der am Ende resultierenden Schichtholzplatte 1 durch die aussteifende Wirkung der allseitigen Zugkraftfestigkeit. Andererseits werden durch die sich kreuzenden Nuten gleichmäßig über die Leimfuge verteilte Hohlräume geschaffen, die beim späteren Verpressen der Holzschichten als Leimsenken dienen, die Verteilung des Leims verbessern und lokale Klebstoffansammlungen verhindern.

Das anschließende Verpressen wird vorbereitet, indem die Wanne mit dem Holzstapel darin mit einem luftdichten Folienmantel abgedeckt wird, so daß dieser Mantel zusammen mit der Wanne eine dicht verschließbare Umhüllung bildet. Der notwendige Preßdruck kann nun einfach durch Evakuieren der Umhüllung zumindest während eines Teils der Kleberabbindezeit erzeugt werden.

Die Nuten 13 in einem Teil der Holzschicht-Flachseiten 15 haben beim Verpressen auch insofern eine vorteilhafte Wirkung, als kleinere Unebenheiten bzw. Verwindungen der Bretter 11 beim Verpressen besser ausgeglichen werden.

Das erfindungsgemäße Verfahren eignet sich aufgrund seiner einfachen und kostengünstigen Mittel besonders zur Herstellung von Schichtholzplatten an ihrem Verwendungsort, beispielsweise einer Baustelle. In diesem Fall können die Bretter 11 bereits vorgefertigt, d. h. gehobelt und mit Nuten versehen, angeliefert werden.

Alternativ zum oben beschriebenen Verfahren kann man den Klebstoff auch zuerst auf die Bretter 11 aufbringen und diese anschließend stapeln.

Das Verfahren wird vereinfacht, wenn die Nuten 13 auf sämtlichen Holzschicht-Flachseiten 15 vorgesehen sind. Das Hobeln der Bretter 11 und das Einarbeiten der Nuten 13 kann dann für alle Bretter in gleicher Weise durchgeführt werden, und man erhält einheitliche Bretter für den Aufbau des Stapels, die ohne Unterscheidung zwischen inneren und äußeren Brettern und ungeachtet ihrer Orientierung gestapelt werden können.

Zu bemerken ist noch, daß der Holzstapel mit der verschließbaren Umhüllung zum Verpressen auch in einem Überdruckbehälter angeordnet werden kann, wobei eine an die Umhüllung angeschlossene Ausgleichsleitung mit Atmosphäre verbunden wird. Durch Füllung des Überdruckbehälters mit einem Druckfluid, beispielsweise Druckluft, kann problemlos ein Druck in der Größenordnung von 10 bar erzeugt werden.

## Patentansprüche

1. Verfahren zur Herstellung eines plattenförmigen Konstruktionsteils für ein Bauwerk, bei welchem eine Vielzahl aus nebeneinander flach liegenden Brettern (11) gebildete Holzschichten (3) in der Weise flächig, insbesondere vollflächig mit Klebstoff versehen und flach aufeinanderliegend gestapelt werden, daß die Bretter (11) in zumindest einem Teil der paarweise benachbarten Holzschichten (3) quer zueinander, insbesondere etwa rechtwinklig zueinander verlaufende Faserrichtungen haben, und bei welchem der Holzstapel mit einem luftdichten Folienmantel abgedeckt wird, der Bestandteil einer dicht verschließbaren Umhüllung ist, die zumindest während eines Teils der Abbindezeit des Klebstoffs evakuiert wird,
dadurch gekennzeichnet, daß in die Bretter (11) Nuten (13) eingearbeitet und die Holzschichten (3) derart gebildet werden, daß zumindest in einem Teil der Holzschicht-Flachseiten die Nuten jeweils im wesentlichen in Faserrichtung und etwa parallel in einem gegenseitigen Abstand von etwa 15 bis 120 Millimeter, insbesondere 20 bis 30 Millimeter, verlaufen
und daß die Holzschichten (3) derart gestapelt werden, daß zumindest in einem Teil der mit quer zueinander verlaufender Faserrichtung paarweise benachbart gestapelten Holzschichten (3) die Nuten der benachbarten Flachseiten sich kreuzen.

2. Verfahren nach Anspruch 1, dadurch gekennzeichnet, daß zumindest in die Holzschichten (3), die zwischen Holzschichten (3) mit quer verlaufender Faserrichtung gestapelt werden, auf beiden Flachseiten (15) Nuten (13) eingearbeitet werden.

3. Verfahren nach Anspruch 2, dadurch gekennzeichnet, daß die auf den beiden Flachseiten (15) vorgesehenen Nuten (13) auf Lücke versetzt, insbesondere mittig versetzt, eingearbeitet werden.

4. Verfahren nach Anspruch 2, dadurch gekennzeichnet, daß die auf den beiden Flachseiten (15) vorgesehenen Nuten (13) paarweise in derselben Querschnittsebene verlaufend eingearbeitet werden.

5. Verfahren nach einem der Ansprüche 1 bis 4, dadurch gekennzeichnet, daß in wenigstens eine der Holzschichten (3) lediglich auf einer ihrer Flachseiten (15) Nuten (13) eingearbeitet werden und diese Nuten mit einer Tiefe von mindestens der Hälfte der Dicke dieser Holzschicht (3), insbesondere einer Tiefe im Bereich des 0,5 bis 0,8fachen der Dicke vorgesehen werden.

6. Verfahren nach Anspruch 3, dadurch gekennzeichnet, daß in wenigstens eine der Holzschichten (3) auf beiden ihrer Flachseiten (15) Nuten (13) eingearbeitet werden und diese Nuten mit einer Tiefe von mindestens der Hälfte der Dicke dieser Holzschicht (3), insbesondere einer Tiefe im Bereich des 0,5 bis 0,8fachen der Dicke vorgesehen werden.

7. Verfahren nach Anspruch 4, dadurch gekennzeichnet, daß in wenigstens eine der Holzschichten (3) auf beiden ihrer Flachseiten (15) Nuten (13) eingearbeitet werden und diese Nuten mit einer Tiefe von mindestens einem Viertel der Dicke dieser Holzschicht (3), insbesondere einer Tiefe im Bereich des 0,25 bis 0,4fachen der Dicke vorgesehen werden.

8. Verfahren nach einem der Ansprüche 1 bis 7, dadurch gekennzeichnet, daß in wenigstens einen Teil der Holzschichten (3) lediglich auf einer ihrer Flachseiten (15) Nuten (13) eingearbeitet werden und durch diese Holzschichten (3) beim Stapeln wenigstens die äußeren Holzschichten (3) gebildet werden, insbesondere derart, daß die mit Nuten (13) versehenen Flachseiten (15b) der äußeren Holzschichten (3a) nach innen gerichtet sind.

9. Verfahren nach einem der Ansprüche 1 bis 8, dadurch gekennzeichnet, daß in wenigstens einen Teil der Holzschichten (3) auf beiden ihrer Flachseiten (15) Nuten (13) eingearbeitet werden und durch die Holzschichten (3) beim Stapeln wenigstens die inneren Holzschichten (3b) gebildet werden.

10. Verfahren nach einem der Ansprüche 1 bis 9, dadurch gekennzeichnet, daß in sämtliche Holzschichten (3) auf beiden ihrer Flachseiten (15) Nuten (13) eingearbeitet werden.

11. Verfahren nach einem der Ansprüche 1 bis 10, dadurch gekennzeichnet, daß der Holzstapel mit der verschließbaren Umhüllung zum Verpressen in einem Überdruckbehälter angeordnet wird.

12. Verfahren nach einem der Ansprüche 1 bis 1 1, dadurch gekennzeichnet, daß die Nuten (13) in einem Arbeitsgang zusammen mit einem Hobeln der Holzschichten (3) oder der Bretter (11) in die Holzschichten (3) bzw. in die Bretter (11) eingearbeitet werden.

13. Verfahren nach einem der Ansprüche 1 bis 12, dadurch gekennzeichnet, daß die Holzschichten (3) am Verwendungsort des Konstruktionsteils, insbesondere auf einer Baustelle, verpreßt werden.

14. Verfahren nach Anspruch 13, dadurch gekennzeichnet, daß zur Bildung der Holzschichten (3) vorgesehene Holzelemente zum Verwendungsort transportiert werden.

15. Verfahren nach Anspruch 14, dadurch gekennzeichnet, daß die Holzelemente von Brettern (11) gebildet werden.

16. Verfahren nach Anspruch 14 oder 15, dadurch gekennzeichnet, daß die Holzelemente von gehobelten und genuteten Brettern (11) gebildet sind.

17. Verfahren nach einem der Ansprüche 1 bis 16, dadurch gekennzeichnet, daß auf das Konstruktionsteil, insbesondere nach dem Verpressen, eine Deckschicht aufgebracht wird.

18. Plattenförmiges Konstruktionsteil für ein Bauwerk, dadurch gekennzeichnet, daß es durch ein Verfahren nach einem der Ansprüche 1 bis 17 hergestellt ist.

19. Plattenförmiges Konstruktionsteil nach Anspruch 18, dadurch gekennzeichnet, daß es zur Verwendung als Wandelement vorgesehen ist.

## Claims

1. A method for manufacturing a plate-like construction component for a building, whereby wood layers (3) formed from a plurality of adjacent flat-lying boards (11) are fitted with cement on their surface, preferably full surface, and are stacked flat on each other in such manner that the boards (11) in at least part of the pairwise adjacent wood layers (3) have mutually transverse and in particular approximately orthogonal fiber directions and whereby the wood stack is covered by an airtight foil wrap which is part of a tightly sealable enclosure being evacuated at least during part of the cement's setting period,
characterized in that slots (13) are fitted into the boards (11) and the wood layers (3) are formed in such manner that, at least in part of the wood-layer large faces, the slots run essentially in the fiber direction and approximately mutually parallel at a mutual spacing of about 15 to 120 mm, in particular 20 to 30 mm, and in that the wood layers (3) are stacked in such manner that, at in least in part of the pairwise adjacent stacked wood layers (3) having mutually transverse fiber directions, the slots of the adjacent large faces cross one another.

2. Method as claimed in claim 1, characterized in that slots (13) are fitted into the two large faces (15) of at least the wood layers (3) stacked between the wood layers (3) having transverse fiber directions.

3. Method as claimed in claim 2, characterized in that the slots present in the two large faces (15) are mutually staggered, in particular one centrally relative to the other.

4. Method as claimed in claim 2, characterized in that the slots (13) present in both large faces (15) are pairwise located in the same cross-sectional plane.

5. Method as claimed in one of claims 1 through 4, characterized in that slots (13) are fitted in at least one of the wood layers (3) solely into one of its large faces (15) and that the depth of these slots is at least half the thickness of this wood layer (3) in particular being in the range of 0.5 to 0.8 the thickness.

6. Method as claimed in claim 3, characterized in that slots (13) are fitted in at least one of the wood layers (3) into both its large surfaces (15) and that the depth of these slots is at least half the thickness of this wood layer (3) in particular being in the range of 0. 5 to 0. 8 the thickness.

7. Method as claimed in claim 4, characterized in that slots (13) are fitted in at least one of the wood layers (3) into both its large faces (15) and that the depth of these slots is at least one-fourth the thickness of this wood layer (3), in particular being in the range of 0.25 to 0.4 the thickness.

8. Method as claimed in one of claims 1 through 7, characterized in that slots (13) are fitted in at least part of the wood layers (3) solely into one of their large faces (15) and in that during stacking said wood layers (3) constitute at least the outer wood layers (3) in particular in such manner that the large faces (15b) fitted with slots (13) of the outer wood layers (3a) are pointing inward.

9. Method as claimed in one of claims 1 through 8, characterized in that slots (13) are fitted in at least part of the wood layers (3) into both their large surfaces (15) and in that during stacking the wood layers (3) will form at least the inner wood layers (3b).

10. Method as claimed in one of claims 1 through 9, characterized in that slots (13) are fitted into all wood layers (3) in both their large surfaces (15).

11. Method as claimed in one of claims 1 through 10, characterized in that the wood stack with the sealable enclosure also is placed inside a overpressure container for compression.

12. Method as claimed in one of claims 1 through 11, characterized in that the slots (13) are processed in one operation together with a planing of the wood layers (3) or of the boards (11) into the wood layers (3) or the boards (11), respectively.

13. Method as claimed in one of claims 1 through 12, characterized in that the wood layers (3) are compressed at the site of use of the construction component, in particular at a construction site.

14. Method as claimed in claim 13, characterized in that wood elements provided for forming wood layers (3) are transported to the site of use.

15. Method as claimed in claim 14, characterized in that the wood elements are formed from boards (11).

16. Method as claimed in claim 14 or 15, characterized in that the wood elements are formed from boards (11) which are planed and fitted with slots.

17. Method as claimed in one of claims 1 through 16, characterized in that a cover layer is deposited, in particular after the compression, on the construction component.

18. Plate-like construction component for a building, characterized in that it is manufactured by a method as claimed in one of claims 1 through 17.

19. Plate-like construction component as claimed in claim 18, characterized in that it is provided for use as a wall element.

## Revendications

1. Procédé de fabrication d'un élément constructif pour un édifice, dans lequel une pluralité de couches de bois (3) formées de planches (11) posées à plat les unes à côté des autres sont munies de colles à plat, en particulier sur toute leur surface, et empilées à plat les unes sur les autres de telle manière que les planches (11) dans au moins une partie des couches de bois (3) voisines par paires présentent des sens des fibres mutuellement transversales, en particulier approximativement perpendiculaires, et dans lequel la pile de bois est recouverte d'une enveloppe en feuille étanche à l'air qui fait partie d'un enveloppement pouvant être fermé hermétiquement, qui est mis sous vide pendant une partie au moins de la durée de prise de la colle,
caractérisé en ce que des rainures (13) sont ménagées dans les planches (11) et les couches de bois (3) son conformées de telle manière qu'au moins dans une partie des faces plates des couches de bois, les rainures s'étendent sensiblement dans la direction des fibres et approximativement parallèles les unes aux autres à une distance mutuelle d'environ 15 à 120 millimètres, en particulier 20 à 30 millimètres, et en ce que les couches de bois (3) sont empilées de telle manière qu'au moins dans une partie des couches de bois (3) voisines par paires à directions de fibres mutuellement transversales, les rainures des faces plates voisines se croisent.

2. Procédé selon la revendication 1, caractérisé en ce qu'au moins dans les couches de bois (3) qui sont empilées entre des couches de bois (3) à directions de fibres mutuellement transversales, des rainures (13) sont ménagées sur les deux faces plates (15).

3. Procédé selon la revendication 2, caractérisé en ce que les rainures (13) prévues sur les deux faces plates (15) sont réalisées décalées, en particulier de manière médiane.

4. Procédé selon la revendication 2, caractérisé en ce que les rainures (13) prévues sur les deux faces plates (15) sont réalisées s'étendant par paires dans le même plan de section.

5. Procédé selon l'une des revendications 1 à 4, caractérisé en ce que, dans au moins l'une des couches de bois (3), les rainures (15) ne sont réalisées que sur l'une de ses faces plates (15) et ces rainures sont prévues avec une profondeur d'au moins la moitié de l'épaisseur de cette couche de bois (3), en particulier une profondeur comprise entre 0,5 fois et 0,8 fois l'épaisseur.

6. Procédé selon la revendication 3, caractérisé en ce que, dans au moins l'une des couches de bois (3), des rainures (15) sont réalisées sur ses deux faces plates (15) et ces rainures sont prévues avec une profondeur d'au moins la moitié de l'épaisseur de cette couche de bois (3), en particulier une profondeur comprise entre 0,5 fois et 0,8 fois l'épaisseur.

7. Procédé selon la revendication 4, caractérisé en ce que, dans au moins l'une des couches de bois (3), des rainures (15) sont réalisées sur ses deux faces plates (15) et ces rainures sont prévues avec une profondeur d'au moins un quart de l'épaisseur de cette couche de bois (3), en particulier une profondeur comprise entre 0,25 fois et 0,4 fois l'épaisseur.

8. Procédé selon l'une des revendications 1 à 7, caractérisé en ce que, dans au moins une partie des couches de bois (3), les rainures (15) ne sont réalisées que sur l'un de leurs faces plates (15) et ces couches de bois (3) forment lors de l'empilement au moins les couches de bois extérieures (3), en particulier de telle manière que les faces plates (15b) munies de rainures (13) des couches de bois (3) extérieures sont tournées vers l'intérieur.

9. Procédé selon l'une des revendications 1 à 8, caractérisé en ce que, dans au moins une partie des couches de bois (3), des rainures (15) sont réalisées sur leurs deux faces plates (15) et ces couches de bois (3) forment lors de l'empilement au moins les couches de bois intérieures (3b).

10. Procédé selon l'une des revendications 1 à 9, caractérisé en ce que, dans toutes les couches de bois (3), des rainures (13) sont ménagées dans leurs deux faces plates (15).

11. Procédé selon l'une des revendications 1 à 10, caractérisé en ce que la pile de bois avec l'enveloppement hermétique est placée pour le pressage dans un récipient sous pression.

12. Procédé selon l'une des revendications 1 à 11, caractérisé en ce que les rainures (13) sont réalisées dans les couches de bois (3) ou dans les planches (11) en une même opération de travail avec le rabotage des couches de bois (3) ou des planches (11).

13. Procédé selon l'une des revendications 1 à 12, caractérisé en ce que les couches de bois (3) sont pressées sur le lieu d'utilisation de l'élément constructif, en particulier sur un chantier.

14. Procédé selon la revendication 13, caractérisé en ce que, pour former les couches de bois, divers éléments en bois sont transportés jusqu'au lieu d'utilisation.

15. Procédé selon la revendication 13, caractérisé en ce que les éléments en bois sont formés de planches (11).

16. Procédé selon la revendication 14 ou 15, caractérisé en ce que les éléments en bois sont formés de blanches rabotées et rainurées (11).

17. Procédé selon l'une des revendications 1 à 16, caractérisé en ce qu'une couche de couverture est appliquée que l'élément constructif, en particulier après le pressage.

18. Élément constructif en forme de panneau pour un édifice, caractérisé en ce qu'il est fabriqué par un procédé selon l'une des revendications 1 à 17.

19. Élément constructif en forme de panneau selon la revendication 18, caractérisé en ce qu'il est prévu pour servir d'élément mural.
